# EUROPÄISCHE PATENTSCHRIFT

(11) **EP 1 510 674 B1**
(45) Veröffentlichungstag und Bekanntmachung des Hinweises auf die Patenterteilung: **12.09.2007**
(21) Anmeldenummer: 04016515.1
(22) Anmeldetag: 14.07.2004
(51) Int. Cl.: F01N 7/02, F01N 7/18, F01N 7/08, B60K 13/04, F01N 3/28, F01N 1/24, F01N 3/20

(54) **Abgasstrang einer Brennkraftmaschine mit eingebautem Vor- und Hauptschalldämpfer**
Exhaust gas system of an internal combustion engine with integrated pre- and main- silencer
Ligne d'échappement d'un moteur à combustion interne comportant des silencieux d'échappement auxiliaire et principal

(30) Priorität: 30.08.2003 DE 10340105
(43) Veröffentlichungstag der Anmeldung: 02.03.2005
(73) Patentinhaber: MAN Nutzfahrzeuge Aktiengesellschaft, 80995 München (DE)
(72) Erfinder: Jacob, Eberhard, Dr., 82152 Krailling (DE); V. Hoerner, Roland, 90419 Nürnberg (DE); Eckert, Reinhard, 82178 Puchheim (DE); Mai, Hans-Peter, 76571 Gaggenau (DE)

(56) Entgegenhaltungen:
- EP-A- 0 619 215
- EP-A- 0 719 914
- DE-A- 4 243 456
- DE-A- 10 123 359

## Beschreibung

Die Erfindung betrifft einen Abgasstrang einer im Fahrgestell-Rahmen eines Nutzfahrzeugs, insbesondere Lastkraftwagens oder Omnibusses, gelagerten Brennkraftmaschine, insbesondere Dieselmotor, mit weiteren Merkmalen, wie im Oberbegriff des Anspruchs 1 angegeben.

Die Erfindung geht aus von einem Abgasstrang wie beispielsweise aus der DE 101 23 359 A1 bekannt. Dabei sind im Abgasstrang in Reihe hintereinander ein Vorschalldämpfer und anschließend ein Hauptschalldämpfer angeordnet, in deren Innenräume jeweils mehrere Katalysatoren eingebaut sind. Der Erfindung liegt dabei die Problematik zugrunde, dass der Vorschalldämpfer im Vergleich zu jenem des Hauptschalldämpfers zwar ein kleineres Volumen aufweist, aber immer noch eine solche Größe hat, dass er nur unter schwierigen Umständen am Nutzfahrzeug montierbar ist. Zwecks Ausnützung der verfügbar hohen Abgastemperaturen sollte der Vorschalldämpfer mit seinem Hydrolysekatalysator möglichst motornah angeordnet werden. Sieht man dieses vor. gab es bisher Einbauprobleme für den nachfolgenden Hauptschalldämpfer, weil dort, wo dieser vorgesehen war, meist schon andere Bauteile oder Aggregate vorhanden waren, die dann versetzt angeordnet werden mussten. Letzteres ist oft nur schwierig oder gar nicht möglich.

Es ist daher Aufgabe der Erfindung, im Abgasstrang der gattungsgemäßen Art eine solche Anordnung von Vor- und Hauptschalldämpfer zu schaffen, dass diese weniger problembehaftet als bisher im Nutzfahrzeug unterbringbar sind.

Diese Aufgabe ist erfindungsgemäß durch die im Anspruch 1 angegebene Anordnung sowie Verbindung von Vor- und Hauptschalldämpfer gelöst.

Vorteilhafte Ausgestaltungen und Details dieser Lösung sind in den Ansprüchen 2-5 angegeben.

Dadurch, dass der Vorschalldämpfer und der Hauptschalldämpfer nun nicht mehr wie bisher in Reihe hintereinander an einer Seite des Nutzfahrzeugs vorgesehen werden, sondern der eine auf einer Seite des Fahrgestell-Rahmens und der andere auf der gegenüberliegenden Seite des Fahrzeugrahmens angeordnet wird, ist es möglich geworden, sowohl den Vorschalldämpfer als auch den Hauptschalldämpfer passend im Nutzfahrzeug unterzubringen.

Nachfolgend ist die erfindungsgemäße Lösung anhand eines in der Zeichnung dargestellten Ausführungsbeispiels noch näher erläutert. In der Zeichnung zeigen:
- Fig. 1: einen Querschnitt durch einen Fahrgestell-Rahmen eines Nutzfahrzeugs mit erfindungsgemäßem Abgasstrang,
- Fig. 2: einen Schnitt durch den Vorschalldämpfer aus Fig. 1 entlang der Schnittlinie II-II, und
- Fig. 3: einen Schnitt durch den Hauptschalldämpfer aus Fig. 1 entlang der Schnittlinie III-III.

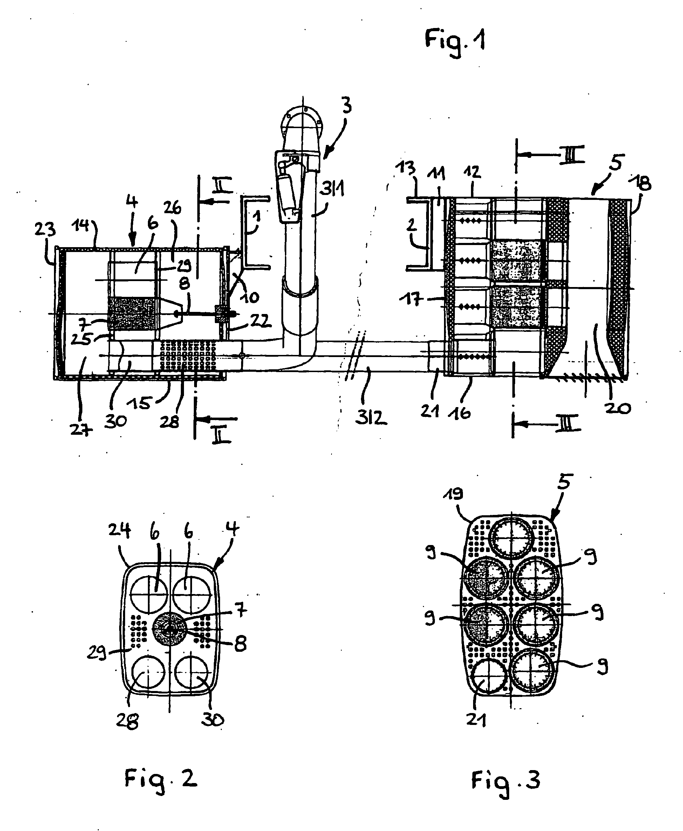

In Fig. 1 sind von einem Fahrgestell-Rahmen eines Nutzfahrzeuges, insbesondere Lastkraftwagens oder Omnibusses, dessen beide Rahmen-Längsträger 1, 2 gezeigt, zwischen und an denen unter anderem eine Brennkraftmaschine , insbesondere Dieselmotor, gelagert ist. Deren Abgas gilt es durch geeignete Nachbehandlungsmaßnahmen auf einen umweltverträglichen Standard zu bringen und deren Schallentwicklung gilt es auf oder unter einen zulässigen Lärmpegel anzusenken, beides geschieht im Abgasstrang der Brennkraftmaschine. Dieser beginnt mit Auspuffkanälen, die zylinderkopfseitig angeflanscht sind und in eine oder mehrere Sammelleitung(en) ausmünden, die entweder direkt oder über Auspuffkrümmer an einer Abgasturbine eines ein- oder mehrstufigen Abgasturboladeraggregates angeschlossen sind. Am Abgasauslass dieses Abgasturboladeraggregates schließt sich eine mehrteilige Abgasleitung 3 an, in die Abgasnachbehandlungs- und Schalldämpfungsvorrichtungen integriert sind. Diese bestehen aus einem Vorschalldämpfer 4 und einem Hauptschalldämpfer 5. In den Vorschalldämpfer 4 sind ein Hydrolysekatalysator 7 und - soweit erforderlich - wenigstens ein den NO₂-Anteil im Abgas signifikant erhöhender Oxidationskatalysator 6 eingebaut, wobei im Einlassbereich des Hydrolysekatalysators 7 eine Dosierleitung 8 endet, die an einer Dosiereinrichtung angeschlossen ist und über die ein Reduktionsmittel wie Harnstoffpartikel oder eine Harnstoff-Wasser-Lösung oder Ammoniak in das Abgas kurz vor dem Hydrolysekatalysator 8 eindüsbar ist. In den Hauptschalldämpfer 5 sind mehrere SCR-Katalysatoren 9 eingebaut, denen sich - falls erforderlich - jeweils ein Ammoniaksperrkatalysator anschließt. Der Hauptschalldämpfer 5 ist auf ein Teilschalldämpfungsvolumen ausgelegt und das in diesem fehlende Restschalldämpfungsvolumen wird mit dem Vorschalldämpfer 4 realisiert. Der Vorschalldämpfer 4 ist in die Abgasleitung 3 strömungsmäßig vor dem Hauptschalldämpfer 5 eingebaut.

Erfindungsgemäß sind der Vorschalldämpfer 4 möglichst motornah auf der einen Seite des Fahrgestell-Rahmens 1, 2 und der Hauptschalldämpfer 5 auf der gegenüberliegenden Seite des Fahrgestell-Rahmens 1, 2 angeordnet sowie dort über geeignete Halterungen 10, 11 befestigt. Außerdem unter- oder überquert der sich zwischen Vorschalldämpfer 4 und Hauptschalldämpfer 5 erstreckende Abschnitt 3/2 der Abgasleitung 3 den Fahrgestell-Rahmen 1, 2.

Im dargestellten Ausführungsbeispiel fluchtet der Hauptschalldämpfer 5 mit seiner Oberseite 12 etwa zur Oberseite 13 jenes Rahmen-Längsträgers 2, an dem er angebaut ist. Der Vorschalldämpfer 4 ist demgegenüber mit seiner Oberseite 14 etwas niedriger angeordnet am gegenüberliegenden Rahmen-Längsträger 1 angebaut, derart, dass seine Unterseite 15 und die Unterseite 16 des Hauptschalldämpfers 5 etwa in einer gemeinsamen Horizontalebene liegen.

Im dargestellten Beispiel ist der Hauptschalldämpfer 5 außen durch eine innere Stirnwand 17, eine äußere Stirnwand 18 und eine Umfangsaußenwand 19 begrenzt. Innen ist der Hauptschalldämpfer 5 durch eine gasdichte Wand in eine Einströmkammer und eine Ausströmkammer unterteilt. Mit letzterer kommuniziert ein Auslasskanal 20. Mit der Einströmkammer kommuniziert der Abschnitt 3/1 der Abgasleitung 3, der an einem Einlassstutzen 21 angeschlossen ist. In den Innenraum des Hauptschalldämpfers 5 sind mehrere parallel von Abgas durchströmbare, einerseits mit der Einströmkammer, andererseits mit der Ausströmkammer kommunizierende Abgasnachbehandlungsmodule eingebaut, die innerhalb ihrer Gehäuse jeweils einen SCR-Katalysator 9 und gegebenenfalls einen nachfolgenden Ammoniaksperrkat aufweisen.

Der Vorschalldämpfer 4 ist im dargestellten Beispiel außen durch eine innere Stirnwand 22, eine äußere Stirnwand 23 und eine Umfangsaußenwand 24 begrenzt. Der Innenraum des Vorschalldämpfers 4 ist durch eine gasdichte Zwischenwand 25 in eine Einströmkammer 26 und eine Ausströmkammer 27 unterteilt, wobei in die Einströmkammer 26 ein an der Stirnwand 22 angeschlossener, umfangsseitig perforierter Rohrstutzen 28 ausmündet, an dem außen der Abschnitt 3/1 der Abgasleitung 3 angeschlossen ist. Die Katalysatoren 6, 7 sind mit ihren Gehäusen im Innenraum des Vorschalldämpfers 4 durch die Zwischenwand 25 und eine weitere, nicht gasdichte, perforierte Haltewand 29 lagestabil gehaltert. Von der Ausströmkammer 27 geht ein Rohrstutzen 30 ab, an dem außen der zum Hauptschalldämpfer 5 hinüber führende Abschnitt 3/2 der Abgasleitung 3 angeschlossen ist.

Der Vorschalldämpfer 4 und der Hauptschalldämpfer 5 sind innen vollständig oder partiell mit schallabsorbierendem Material in solcher Dicke und Art ausgebildet, dass die Schalldämpfungsmaßnahmen im Hauptschalldämpfer 5 addiert zu den Schalldämpfungsmaßnahmen im Vorschalldämpfer 4 einen Gesamtschalldämpfungseffekt ergeben, der eine Einhaltung oder Unterschreitung der gesetzlichen Schallemissionswerte ermöglicht.

Die erfindungsgemäße Anordnung von Vor- und Hauptschalldämpfer 4, 5 ist nicht auf deren vorbeschriebene Bauarten beschränkt. Vielmehr können der Vor- und Hauptschalldämpfer 4, 5 jederzeit auch anderen Bauarten gehorchen und auch in ihren Innenräumen können mehr oder weniger oder andere Arten von Katalysatoren als im dargestellten Ausführungsbeispiel angeordnet sein.

## Patentansprüche

1. Abgasstrang einer im Fahrgestell-Rahmen eines Nutzfahrzeugs, insbesondere Lastkraftwagens oder Omnibusses, gelagerten Brennkraftmaschine, insbesondere Dieselmotor, mit integrierten Abgasnachbehandlungs- und Schalldämpfungsvorrichtungen, umfassend
- einen Vorschalldämpfer (4), in den ein Hydrolysekatalysator (7) und - soweit erforderlich - wenigstens ein den NO₂-Anteil im Abgas signifikant erhöhender Oxidationskatalysator (6) eingebaut sind, wobei in das Abgas kurz vor dem Hydrolysekatalysator (7) ein von einer Dosiereinrichtung (8) zugeführtes Reduktionsmittel wie Harnstoffpartikel oder eine Harnstoff-Wasser-Lösung oder Ammoniak eindüsbar ist, und
- einen Hauptschalldämpfer (5) mit mehreren eingebauten SCR-Katalysatoren (9), denen sich gegebenenfalls jeweils ein Ammoniaksperrkatalysator anschließt,
wobei der Hauptschalldämpfer (5) auf ein Teilschalldämpfungsvolumen ausgelegt und das Restschalldämpfungsvolumen mit dem Vorschalldämpfer (4) realisiert ist, der in die von der Brennkraftmaschine bzw. deren Aufladeaggregat abgehende Abgasleitung (3) strömungsmäßig vor dem Hauptschalldämpfer (5) eingebaut ist, **dadurch gekennzeichnet, dass** der Vorschalldämpfer (4) möglichst motomah auf der einen Seite des Fahrgestell-Rahmens (1, 2) und der Hauptschalldämpfer (5) auf der gegenüberliegenden Seite des Fahrgestell-Rahmens (1, 2) angeordnet sowie an letzterem über geeignete Halterungen (10, 11) befestigt sind, und dass der sich zwischen Vor- und Hauptschalldämpfer (4, 5) erstreckende Abschnitt (3/2) der Abgasleitung (3) den Fahrgestell-Rahmen unter- oder überquert.

2. Abgasstrang nach Anspruch 1, **dadurch gekennzeichnet, dass** der Hauptschalldämpfer (5) mit seiner Oberseite (12) etwa zur Oberseite (13) jenes Rahmen-Längsträgers (2), an den er angebaut ist, fluchtet und dass der Vorschalldämpfer (4) mit seiner Oberseite (14) demgegenüber etwas niedriger angeordnet am gegenüberliegenden RahmenLängsträger (1) angebaut ist, derart, dass die Unterseite (15) des Vorschalldämpfers (4) und die Unterseite (16) des Hauptschalldämpfers (5) etwa in einer gemeinsamen Horizontalebene liegen.

3. Abgasstrang nach Anspruch 1, **dadurch gekennzeichnet, dass** der Hauptschalldämpfer (2) außen durch eine innere Stirnwand (17), eine äußere Stirnwand (18) und eine Umfangsaußenwand (19) begrenzt sowie innen durch eine Wand in eine Einströmkammer und eine Ausströmkammer unterteilt ist und in seinen Innenraum mehrere parallel durchströmbare, einerseits mit der Einströmkammer, andererseits mit der Ausströmkammer kommunizierende Abgasnachbehandlungsmodule eingebaut sind, die innerhalb ihrer Gehäuse jeweils einen SCR-Katalysator (9), gegebenenfalls auch einen nachfolgenden Ammoniaksperrkatalysator aufweisen.

4. Abgasstrang nach Anspruch 1, **dadurch gekennzeichnet, dass** der Vorschalldämpfer (4) außen durch eine innere Stirnwand (22), eine äußere Stirnwand (23) und eine Umfangsaußenwand (24) begrenzt ist, und dass der Innenraum des Vorschalldämpfers (14) durch eine gasdichte Zwischenwand (25) in eine Einströmkammer (26) und eine Ausströmkammer (27) unterteilt ist, wobei in die Einströmkammer (26) ein an der Stirnwand (22) angeschlossener Rohrstutzen (28) ausmündet, an dem entweder eine Abgassammelleitung oder ein an letzterer angeschlossener Abgaskrümmer oder der Auslassstutzen einer Abgasturbine eines Abgasturboladeraggregates oder ein an letzterer angeschlossenes Abgasleitungsteilstück (3/1) angeschlossen ist, und wobei die Katalysatoren (6, 7) mit ihren Gehäusen durch die Zwischenwand (25) und gegebenenfalls eine weitere, nicht gasdichte Haltewand (29) lagestabil im Vorschalldämpfer-Innenraum gehaltert sind, und wobei von der Ausströmkammer (27) ein an der Stirnwand (25) angeschlossener Rohrstutzen (30) abgeht, an dem ein zum Hauptschalldämpfer (5) hinüber führender Abschnitt (3/2) der Abgasleitung (3) angeschlossen ist.

5. Abgasstrang nach Anspruch 1, **dadurch gekennzeichnet, dass** der Vorschalldämpfer (4) und der Hauptschalldämpfer (5) innen vollständig oder partiell mit schallabsorbierendem Material in solcher Dicke und Art ausgekleidet sind, dass die Schalldämpfungsmaßnahmen im Hauptschalldämpfer (5) addiert zu den Schalldämpfungsmaßnahmen im Vorschalldämpfer (4) einen Gesamtschalldämpfungseffekt ergeben, der der Einhaltung gesetzlicher Schallemissionswerte gerecht wird.

## Claims

1. Exhaust-system branch of an internal combustion engine, particularly a diesel engine, mounted in the chassis frame of a commercial vehicle, particularly a truck, with integrated exhaust-gas-aftertreatment and sound-attenuation devices, comprising
• a pre-silencer (4) in which a hydrolytic catalytic converter (7) and - if necessary - at least one oxidising catalytic converter (6) which significanly increases the NO₂ content of the exhaust gases are installed, whereby a reducing agent such as urea particles or a urea water solution or ammonia, supplied by a metering device (8), can be sprayed into the exhaust gases shortly upstream of the hydrolytic catalytic converter (7) and
• a main silencer (5) with several installed SCR catalytic converters (9), downstream of each of which an ammonia blocking catalytic converter is provided if necessary,
whereby the main silencer (5) is designed for a partial sound-attentuation volume and the residual sound-attenuation volume is achieved with the pre-silencer (4) which is installed upstream of the main silencer (5) in the exhaust-gas pipe (3) exiting the internal combustion engine or its supercharging unit, **characterised in that** the pre-silencer (4) is arranged on the one side of the vehicle frame (1, 2) as close to the engine as possible and the main silencer (5) is arranged on the opposite side of the chassis frame (1, 2), that the pre-silencer (4) and main silencer (5) are fastened to said chassis frame (1, 2) by means of suitable fasteners (10, 11) and that the section (3/2) of the exhaust-gas pipe (3) extending between the pre-silencer and the main silencer (4, 5) passes under or over the chassis frame.

2. Exhaust-system branch according to Claim 1, **characterised in that** the top side (12) of the main silencer (5) is approximately flush with the top side (13) of that frame longitudinal member (2) to which it is fastened and that the top side (14) of the pre-silencer (4) is attached to the opposite frame longitudinal member (1) at a somewhat lower height so that the underside (15) of the pre-silencer (4) and the underside (16) of the main silencer (5) are approximately in the same horizontal plane.

3. Exhaust-system branch according to Claim 1, **characterised in that** the main silencer (5) is externally limited by an inner end wall (17), an outer end wall (18) and a circumferential wall (19) and is internally subdivided into an inlet chamber and an outlet chamber by a wall, whereby several exhaust-gas aftertreatment modules are installed in the interior of said main silencer (5) and whereby exhaust gases can pass through said modules which are in parallel arrangement, communicate with the inlet chamber on the one hand and with the outlet chamber on the other, each module having, within its housing, a SCR catalytic converter (9) and, if necessary, an ammonia-blocking catalytic converter arranged downstream of said SCR catalytic converter (9).

4. Exhaust-system branch according to Claim 1, **characterised in that** the pre-silencer (4) is externally limited by an inner end wall (22), an outer end wall (23) and a circumferential wall (24) and that the interior of the pre-silencer (14) is subdivided into an inlet chamber (26) and an outlet chamber (27) by a gas-tight intermediate wall (25), whereby a pipe neck (28) connected to the end wall (22) opens into the inlet chamber (26), to which pipe neck (28) is connected either an exhaust-gas header pipe or an exhaust-gas manifold connected to said header pipe or the exhaust-gas neck of an exhaust-gas turbine of a turbocharger unit or an exhaust-gas pipe piece (3/1) connected to said exhaust-gas turbine and whereby the catalytic converters (6, 7) with their housings are kept in a stable position in the pre-silencer interior by the intermediate wall (25) and, if appropriate, by another, non-gas-tight fastening wall (29) and whereby a pipe neck (30) connected to the end wall (22) exits the outlet chamber (27) and to which pipe neck (30) a section (3/2) of the exhaust-gas pipe (3) is connected, said section leading across to the main silencer (5).

5. Exhaust-system branch according to Claim 1, **characterised in that** the interior of the pre-silencer (4) and main silencer (5) is completely or partially clad with sound-absorbing material of such thickness and type that the addition of the sound-attenuation measures in the main silencer (5) to the sound-attenuation measures in the pre-silencer (4) results in an overall sound-attenuation effect which complies with statutory acoustic emission values.

## Revendications

1. Ligne de gaz d'échappement d'un moteur à combustion interne, notamment d'un moteur diesel, montée dans le cadre de châssis d'un véhicule industriel, notamment d'un camion ou d'un bus, doté de dispositifs intégrés de posttraitement des gaz d'échappement et d'amortissement des bruits, comprenant
- un silencieux avant (4) dans lequel sont installés un catalyseur à hydrolyse (7) et - si nécessaire - au moins un catalyseur à oxydation augmentant de manière significative la part de NO₂ dans les gaz d'échappement, un agent réducteur, tel que des particules d'urée ou une solution d'urée et d'eau ou de l'ammoniaque, amené par un dispositif de dosage (8) et pouvant être injecté dans les gaz d'échappement juste devant le catalyseur à hydrolyse (7), et
- un silencieux principal (5) comprenant plusieurs catalyseurs SCR (9) intégrés, auxquels un catalyseur d'ammoniaque se raccorde respectivement, le cas échéant,
le silencieux principal (5) étant conçu pour un volume partiel d'amortissement de bruits et le volume restant d'amortissement de bruits étant obtenu au moyen du silencieux avant (4) installé dans le conduit d'échappement (3) partant du moteur à combustion interne, respectivement de son organe de suralimentation, en amont du silencieux principal (5) dans le sens du flux, **caractérisée en ce que** le silencieux avant (4) est disposé le plus près possible du moteur sur un côté du cadre de châssis (1, 2) et le silencieux principal (5) est disposé du côté opposé du cadre de châssis (1, 2) et fixé sur ce dernier par l'intermédiaire d'attaches appropriées (10, 11), et **en ce que** la section (3/2), s'étendant entre le silencieux avant et le silencieux principal (4, 5), du conduit d'échappement (3) passe en dessous ou au-dessus du cadre de châssis en le traversant.

2. Ligne de gaz d'échappement selon la revendication 1, **caractérisée en ce que** le côté supérieur (12) du silencieux principal (5) est à peu près en ligne avec le côté supérieur (13) du longeron de cadre (2), sur lequel il est installé, et **en ce que** le côté supérieur (14) du silencieux avant (4) est, par contre, installé un peu plus bas sur le longeron de cadre (1) opposé, de telle manière que le côté inférieur (15) du silencieux avant (4) et le côté inférieur (16) du silencieux principal (5) sont situés à peu près dans un plan horizontal commun.

3. Ligne de gaz d'échappement selon la revendication 1, **caractérisée en ce que** le silencieux principal (5) est délimité à l'extérieur par une paroi frontale intérieure (17), une paroi frontale extérieure (18) et une paroi extérieure circonférentielle (19) et qu'il est divisé à l'intérieur en une chambre d'admission et en une chambre d'évacuation par une paroi et **en ce que** plusieurs modules de posttraitement des gaz d'échappement pouvant être traversés parallèlement et communiquant, d'une part, avec la chambre d'admission et, d'autre part, avec la chambre d'évacuation, sont installés dans son espace intérieur, ces modules présentant à l'intérieur de leur carter respectif un catalyseur SCR (9), le cas échéant, également un catalyseur à rétention d'ammoniaque monté en aval.

4. Ligne de gaz d'échappement selon la revendication 1, **caractérisée en ce que** le silencieux avant (4) est délimité à l'extérieur par une paroi frontale intérieure (22), une paroi frontale extérieure (23) et une paroi extérieure circonférentielle (24) et **en ce que** l'espace intérieur du silencieux avant (4) est divisé en une chambre d'admission (26) et en une chambre d'évacuation (27) par une paroi intermédiaire (25) étanche aux gaz, une tubulure (28) raccordée à la paroi frontale (22) aboutissant dans la chambre d'admission (26), à laquelle tubulure est raccordé soit un collecteur d'échappement, soit un coude d'échappement raccordé au collecteur d'échappement, soit la tubulure d'échappement d'une turbine à gaz d'échappement d'une unité de turbocompresseur à gaz d'échappement, soit une pièce partielle (3/1) raccordée à cette turbine à gaz d'échappement, et les catalyseurs (6, 7) étant maintenus avec leurs boîtiers de manière stable dans l'espace intérieur du silencieux avant par la paroi intermédiaire (25) et éventuellement par une paroi de support (29) supplémentaire, non étanche aux gaz, et une tubulure (30) raccordée à la paroi frontale (22) partant de la chambre d'évacuation (27), sur laquelle tubulure est raccordée une section (3/2) du conduit d'échappement (3) conduisant vers le silencieux principal (5).

5. Ligne de gaz d'échappement selon la revendication 1, **caractérisée en ce que** le silencieux avant (4) et le silencieux principal (5) sont recouverts à l'intérieur, complètement ou partiellement, d'un matériau absorbant les bruits d'une telle épaisseur et d'une telle manière que les mesures d'amortissement des bruits dans le silencieux principal (5), additionnées aux mesures d'amortissement des bruits dans le silencieux avant (4), donnent un effet total d'amortissement des bruits qui est conforme au respect des valeurs légales d'émissions sonores.
